## Europäisches Patentamt

(19) **European Patent Office**

**Office européen des brevets**

(11) Veröffentlichungsnummer: **0 012 192**
**B1**

(12) # EUROPÄISCHE PATENTSCHRIFT

(45) Veröffentlichungstag der Patentschrift:
**12.01.83**

(51) Int. Cl.³: **B 30 B 11/22**, B 01 J 2/20

(21) Anmeldenummer: **79104136.1**

(22) Anmeldetag: **25.10.79**

(54) **Vorrichtung zum Auspressen von fliessfähigen Massen aus einem Behälter.**

(30) Priorität: **08.12.78 DE 2853054**
**16.10.79 DE 2941802**

(43) Veröffentlichungstag der Anmeldung:
**25.06.80 Patentblatt 80/13**

(45) Bekanntmachung des Hinweises auf die Patenterteilung:
**12.01.83 Patentblatt 83/2**

(84) Benannte Vertragsstaaten:
**AT BE FR GB NL SE**

(56) Entgegenhaltungen:
**DE-B-1 287 045**
**DE-B-1 767 381**
**GB-A-889 628**
**US-A-1 848 332**
**US-A-2 653 350**
**US-A-3 702 748**

(73) Patentinhaber: **Santrade Ltd., Alpenquai 12 P.O.**
**Box 321, CH-6002 Luzern (CH)**

(72) Erfinder: **Froeschke, Reinhard,**
**Wilhelm-Enssle-Strasse 73, D-7064 Remshalden 3 (DE)**

(74) Vertreter: **Wilhelm, Hans-Herbert, Dr.-Ing. et al,**
**Gymnasiumstrasse 31B, D-7000 Stuttgart 1 (DE)**

ACTORUM AG

## Vorrichtung zum Auspressen von fliessfähigen Massen aus einem Behälter

Die Erfindung bezieht sich auf eine Vorrichtung zum Auspressen von fliessfähigen Massen aus einem zylindrischen, drehbaren Behälter, der mit auf dessen Umfang verteilt angeordneten Durchtrittsöffnungen für die dem Behälter axial zugeführten Massen versehen und oberhalb eines Transport- oder Kühlbandes angeordnet ist, auf welches die austretenden Massen fallen und anschliessend erstarren oder gelieren, wobei das Auspressen durch eine Relativdrehung eines weiteren zylindrischen Körpers gegenüber dem Behälter bewirkt wird.

Vorrichtungen zum Auspressen fliessfähiger Massen sind bekannt. So ist zur Bildung von Granulat beispielsweise eine Bauart mit einem in einem Zylinder hin und her gehenden Stempel bekanntgeworden (DE-B-1 085 139), bei der aus einer Reihe von Düsen in einer Stirnwand des Zylinders die Massen entweder in Streifen oder, bei hin und her gehendem Stempel, auch in Tropfenform austreten. Diese Einrichtungen eignen sich zur Verarbeitung von Kunststoffpulver, wobei diese bekannten Einrichtungen auch eine Beheizung vorsehen.

Auch eine andere Bauart zur Herstellung von festen Teilchen ist bekannt (DE-B-2 635 147), bei der eine unter dem wechselnden Druck einer Flüssigkeit hin und her bewegte Membran für das Auspressen der fliessfähigen Masse aus Düsen sorgt. Die zuletzt genannte Bauart weist dabei den Vorteil auf, dass in dem die zu verarbeitende Masse aufnehmenden Raum keine an dessen Wandungen dicht geführten mechanischen Teile bewegt werden müssen, so dass der Verschleiss gering gehalten werden kann. Für Materialien, die schlecht tropffähig sind, lassen sich dagegen solche Bauarten nur bedingt einsetzen.

Es sind auch Vorrichtungen der eingangs genannten Art bekannt (DE-B-1 767 381 und DE-B-1 287 045), bei denen eine rotierende, auf ihrem Umfang mit Durchtrittsöffnungen versehene Trommel vorgesehen ist, in die das zu granulierende Material seitlich eingespeist und an zwei diametral gegenüberliegenden Seiten der Trommel bei deren Rotation dadurch herausgedrückt wird, dass innerhalb der Trommel fest angeordnete, aber drehbare Walzen vorgesehen sind, deren Umfang jeweils an der Innenwand der rotierenden Trommel anliegt. Das Granulat muss dann dadurch gebildet werden, dass der Aussenseite der rotierenden Trommel Schneidmesser zugeordnet werden, die die austretenden Materialstränge in der gewünschten Länge abtrennen.

Vorrichtungen dieser Art weisen den Nachteil auf, dass an der Berührungsstelle der innenliegenden Walzen mit dem Innendurchmesser der rotierenden Trommel ein Verschleiss auftritt. Weiter ist nachteilig, dass solche Vorrichtungen nicht zur Bildung von Granulat aus sehr leicht fliessfähigen Materialien eingesetzt werden können, das unter Druck in Tropfenform aus den Öffnungen austritt, weil sich solche Tropfen auf dem gesamten Umfang der rotierenden Trommel bilden würden, so dass sich eine am Umfang anhaftende Materialschicht bildet, die dann unkontrolliert abfliesst oder zu einem Verstopfen führt.

Der Erfindung liegt die Aufgabe zugrunde, eine Vorrichtung der eingangs genannten Art so auszubilden, dass sowohl schlecht tropffähige als auch leicht fliessfähige Materialien in einfacher Weise und mit hohem Wirkungsgrad zu Granulat verarbeitet werden können.

Die Erfindung besteht darin, dass der weitere zylindrische Körper ebenfalls als ein zylindrischer Behälter ausgebildet ist, dessen Wandung an der Innenwandung des ersten Behälters relativ drehbar geführt ist und der mit dem Transportband zugewandten Öffnungen versehen ist, die bei der Relativdrehung der beiden Behälter zyklisch mit den Öffnungen des ersten zylindrischen Behälters zur Deckung kommen. Durch diese Ausgestaltung dienen die Wandteile des äusseren Behälters gleichsam als Abschneidevorrichtung, und es lässt sich durch diese Ausgestaltung eine sehr einfach aufzubauende Vorrichtung zum Auspressen und Granulieren von fliessfähigen Massen erreichen. Durch die neue Ausgestaltung lässt sich auch eine Vorrichtung ohne hin und her gehende Teile, wie Stempel oder Kolben, verwirklichen, und es kann die bei bekannten Bauarten auftretende Reibung und der damit verbundene Verschleiss an den rotierenden Teilen vermieden werden. Vorteilhaft können die Öffnungen dabei in beiden zylindrischen Behältern in Reihen angeordnet sein, die parallel zu den Zylinderachsen verlaufen, wobei die Anordnung so getroffen wird, dass die Zylinderachse senkrecht oder schräg zur Bewegungsrichtung des Transportbandes angeordnet ist. Es ist dabei möglich, den äusseren zylindrischen Behälter ortsfest anzuordnen und mit einer dem Transportband zugewandten Lochreihe zu versehen, während sich im Inneren der zweite Zylinder mit der Vielzahl von Öffnungen dreht.

Eine wesentlich bessere Ausführung ergibt sich jedoch, wenn der innere, als Zylindertrommel ausgebildete Behälter mit einer dem Transportband zugewandten Lochreihe oder mit einem Schlitz versehen und ortsfest angeordnet ist und wenn der äussere, als Zylindertrommel ausgebildete Behälter sich um diese feststehende Trommel dreht, wobei dann jeweils die entsprechenden Lochreihen nacheinander zur Deckung kommen und das im Inneren der Trommel unter Druck stehende und vorzugsweise beheizte Medium diskontinuierlich und in Tropfenform auf das Transportband austreten kann.

Besonders vorteilhaft ist es dabei, wenn die Drehrichtung und die Umfangsgeschwindigkeit der äusseren Trommel so gewählt sind, dass die dem Transportband zugewandte Seite der äusseren Trommel eine Umfangsgeschwindigkeitskomponente in Richtung der Bewegung des Transportbandes aufweist und wenn diese Umfangsgeschwindigkeitskomponente grösser oder gleich gross ist wie die Bewegungsgeschwindigkeit des Transportbandes. Es hat sich nämlich herausgestellt, dass durch diese Ausgestaltung eine wesentlich höhere Produktion bei einer Tropfenbildung erreicht werden kann. Das ist darauf zurückzuführen, dass der bei zähen Massen aus den Düsenöffnungen zum Transportband hin austretende Tropfen bei üblichen Tropfenformern bereits auf das Transportband auftrifft, ehe sich das Ende schon vollkommen von der Abtropföffnung gelöst hat. Da sich das Transportband aber relativ zu der Abtropföffnung bewegt, zieht sich das Ende des Tropfens fadenförmig nach hinten um und bildet unerwünschte Tropfenfortsetzungen auf dem Band. Um das zu vermeiden, muss die Bandgeschwindigkeit entsprechend niedrig gewählt werden, so dass das Tropfenende noch auf die Masse des schon auf dem Band befindlichen Tropfens fällt.

Durch die vorher erwähnte Ausgestaltung der erfindungsgemässen Vorrichtung, bei der das dem Transportband zugewandte Ende der Abtropföffnung in der Bandlaufrichtung mitbewegt wird, kann auch bei grösseren Bandgeschwindigkeiten erreicht werden, dass das Tropfenende nicht als Faden auf dem Band nachgezogen wird, sondern in die Tropfenmasse hereinfällt. Die neue Ausgestaltung erlaubt daher wesentlich höhere Bandgeschwindigkeiten und damit auch höhere Produktionsgeschwindigkeiten. Während bei bekannten Tropfenformeinrichtungen eine Bandgeschwindigkeit von ca. 6 bis 7 m pro Minute verwirklicht werden konnte, war es bei der Verarbeitung des gleichen Materials mit der neuen Einrichtung möglich, Bandgeschwindigkeiten z.B. von 25 m pro Minute zu verwirklichen.

Vorteilhaft können bei der neuen Ausführungsform die Behälter mit einer Heizung versehen sein, die durch in den Innenraum hereingeführte Heizrohre gebildet sein kann. Vorteilhaft ist es aber, wenn der innere Behälter doppelwandig ausgebildet wird und der zwischen den Wandungen gebildete Raum als Beheizungsraum vorgesehen wird, der beispielsweise mit Thermoöl, mit Dampf oder heissem Wasser durchströmt werden kann. Um bei dieser Ausführung eine einfache Herstellung zu gewährleisten, werden die beiden Wandungen des inneren Behälters durch zylindrisch gebogene Blechplatten gebildet, die mit ihren Kanten an zwei Mantellinien mit einer Leiste verbunden sind, welche die Öffnungen zum Auspressen der fliessfähigen Masse aufweist. Durch diese Ausgestaltung ist eine leichte Herstellung möglich und Schwierigkeiten bei der Anordnung der auf einer Mantellinie liegenden Auspressöffnungen werden umgangen.

Eine zweckmässige Weiterbildung des Gegenstandes der Erfindung besteht darin, dass ein Schaber zur Entfernung von überflüssigem, nicht abgetropftem Material von der äusseren Behälterwand vorgesehen ist. Dieser Schaber kann in üblicher Weise mit der Spitze gegen die Bewegungsrichtung gerichtet sein, so dass das abgeschabte Material über die Schaberoberfläche abgeführt und beispielsweise einer Wiederaufbereitung zugeführt werden kann. Eine besonders vorteilhafte Ausführungsform sieht vor, dass der Schaber als Spachtel ausgebildet ist und mit der Spitze in der Drehrichtung des äusseren Behälters an dessen Umfang anliegt, so dass er das überschüssige Material bei der Drehung des äusseren Behälters in dessen Lochreihen zurückdrückt, von wo es dann mit den nächsten Tropfen auf das Band befördert werden kann. Vorteilhaft sind zwischen mindestens zwei auf dem Umfang versetzt angeordnete Öffnungen des äusseren Behälters Sammelkanäle vorgesehen, die mit dazu beitragen sollen, das vom Spachtel in die Öffnungen zurückzudrückende Material von der Oberfläche abzuführen. Die Anordnung eines Schabers lässt sich aber in der Regel nicht umgehen, weil es sich gezeigt hat, dass die Eindrückvorrichtung alleine nicht ausreicht, um für eine genügend saubere Aussenfläche der rotierenden Trommel zu sorgen.

Nachteilig ist aber, dass das abgeschabte Material in der Regel verloren ist oder auf relativ umständliche Weise wieder der Schmelze zugeführt werden muss.

In Weiterbildung der Erfindung soll daher eine Einrichtung der eingangs genannten Art so ausgebildet werden, dass das aus den äusseren Öffnungen nicht abgetropfte Material sicher innerhalb der Kontur der äusseren Trommel gehalten wird, so dass ein Abschaben dieser Oberfläche überflüssig wird.

Das wird dadurch erreicht, dass in dem vom Transport- oder Kühlband abgewandten Bereich zwischen beiden Behältern ein exzentrischer Spalt vorgesehen ist. Durch diese Ausgestaltung entsteht in dem exzentrischen Spalt bei der Rotation ein gewisser Unterdruck, durch den das in den Öffnungen der äusseren Trommel befindliche Material nach innen und zumindest in die Öffnungen zurückgezogen werden kann. Es hat sich gezeigt, dass auf diese Weise eine Abschabevorrichtung nicht notwendig ist, weil der äussere Trommelumfang frei von anhaftendem Material gehalten werden kann. Vorteilhaft ist es, wenn der exzentrische Spalt durch eine am Umfang des inneren Behälters vorgesehene, exzentrisch angeordnete Ausdrehung gebildet ist, deren Durchmesser kleiner ist als der Innendurchmesser des äusseren zylindrischen Behälters. Beide zylindrischen Behälter können so leicht ineinandergeführt werden.

Vorteilhaft ist es, wenn bei dieser Anordnung die spachtelförmige Eindrückvorrichtung am Umfang des Aussenbehälters, mit der das in den Öffnungen hängende Material zurückgedrückt werden soll, in dem Bereich des Exzenterspaltes angeordnet ist. Dabei kann fluchtend zu dem am Umfang des Aussenbehälters anliegenden Eindrückspachtel eine am Umfang anliegende Abdeckung vorgesehen sein, die etwa den Abschnitt überspannt, in dem die beiden Behälter zwischen sich den Exzenterspalt bilden. Diese Ausgestaltung weist den Vorteil auf, dass das ganze, an der Aussenfläche anhaftende Material bei der Rotation sicher nach innen zurückgedrückt und unterhalb der Abdeckung durch den dort auftretenden Unterdruck nach innen zurückgezogen wird. Die Abdeckung verhindert dabei, dass Luft von aussen nachgezogen werden kann, wodurch der Aufbau des Unterdruckes unter Umständen verhindert oder beeinträchtigt werden könnte.

Vorteilhaft ist es auch, wenn die Abdeckung seitlich durch die Wölbung des äusseren Behälters angepasste bogenförmige Einweisstege begrenzt ist, die an ihrem in Drehrichtung des äusseren Behälters vorneliegenden Enden mit Anschrägungen versehen sind, die in den Bereich der Eindrückvorrichtung einlaufen. Dadurch wird die Gewähr dafür gegeben, dass das vom Abtropfvorgang her kommende, an der Aussenfläche anhaftende Material trichterförmig in den Spalt zwischen der Eindrückvorrichtung und der äusseren Trommel hereingeführt wird, von wo aus es durch die Eindrückvorrichtung und durch die Wirkung des Exzenterspaltes in dem Bereich innerhalb des Umfanges der äusseren Trommel zurückgezogen wird.

Die neue Vorrichtung zeichnet sich durch saubere Aussenflächen an der rotierenden Trommel aus. Dadurch wiederum ergibt sich ein störungsfreier Arbeitsablauf bei der erneuten Austropfung im unteren Bereich der rotierenden Trommel.

Die Erfindung ist anhand von Ausführungsbeispielen schematisch in den Zeichnungen dargestellt und in der folgenden Beschreibung erläutert. Es zeigen:

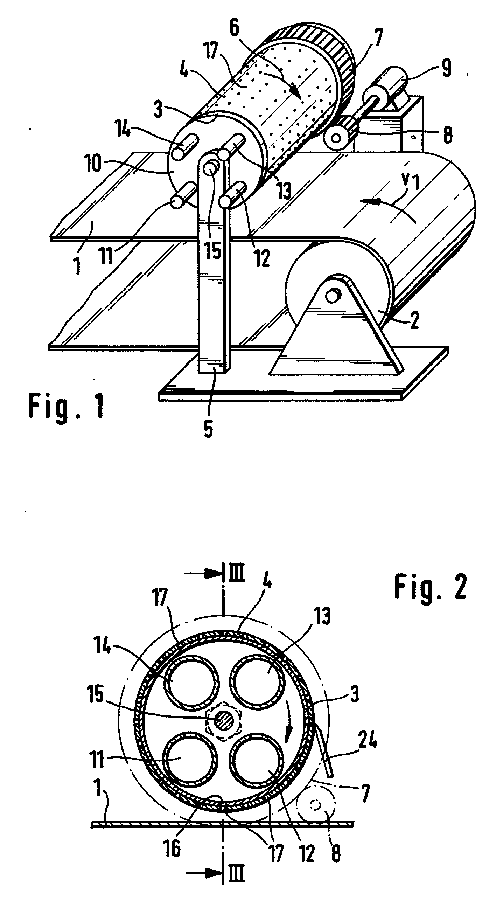

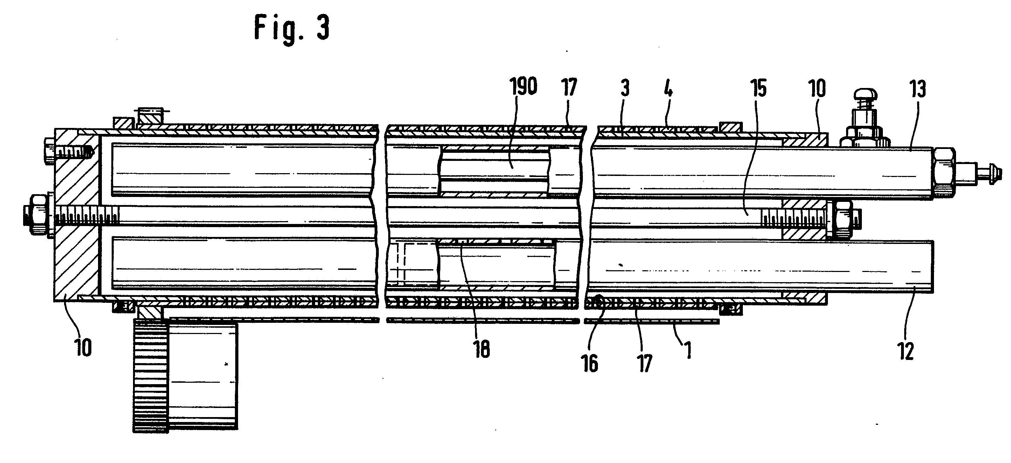

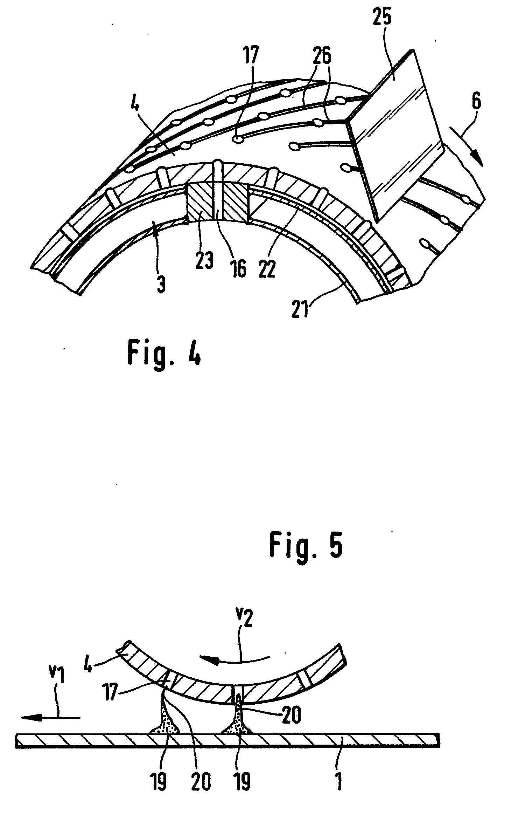

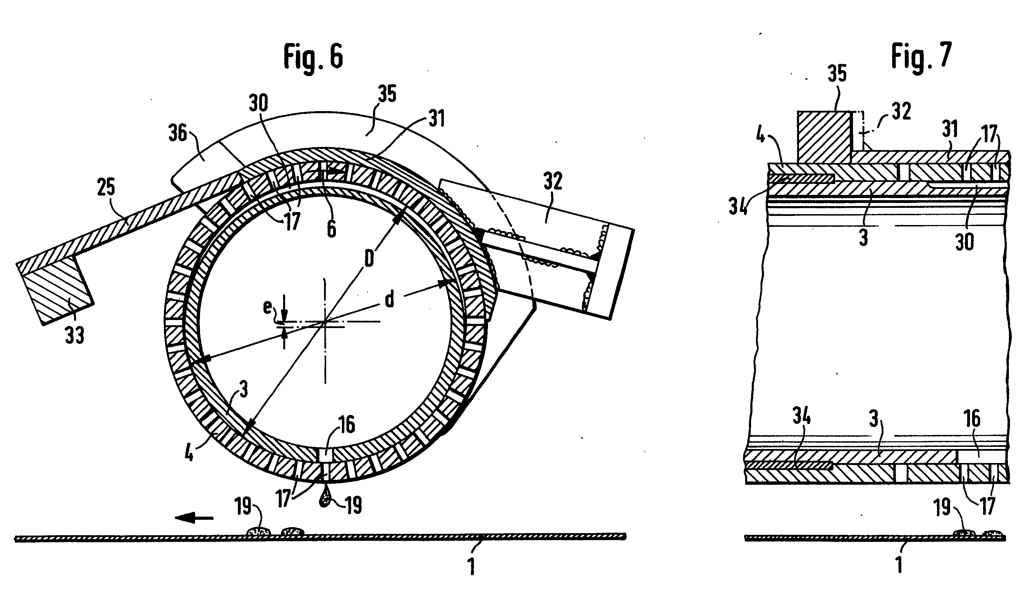

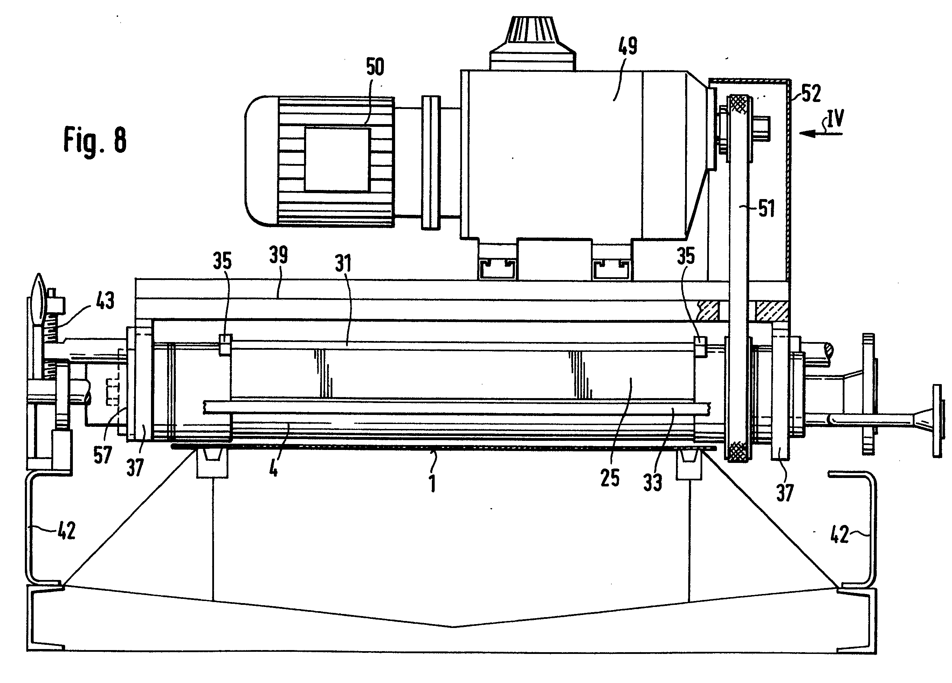

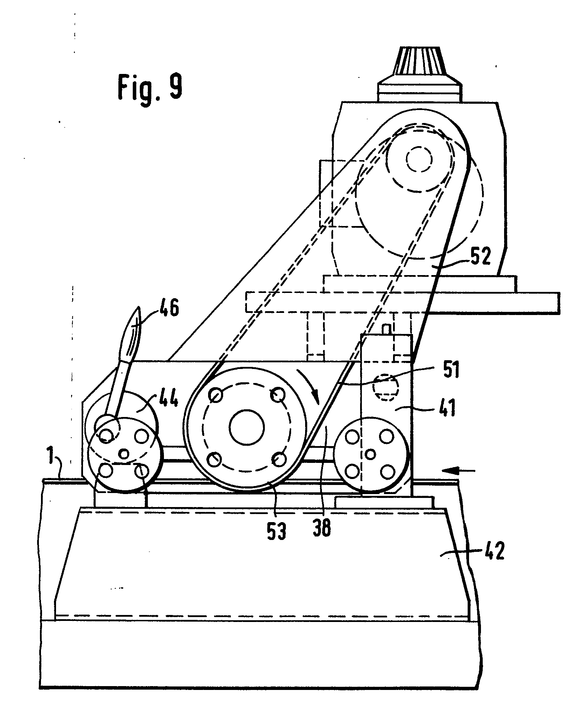

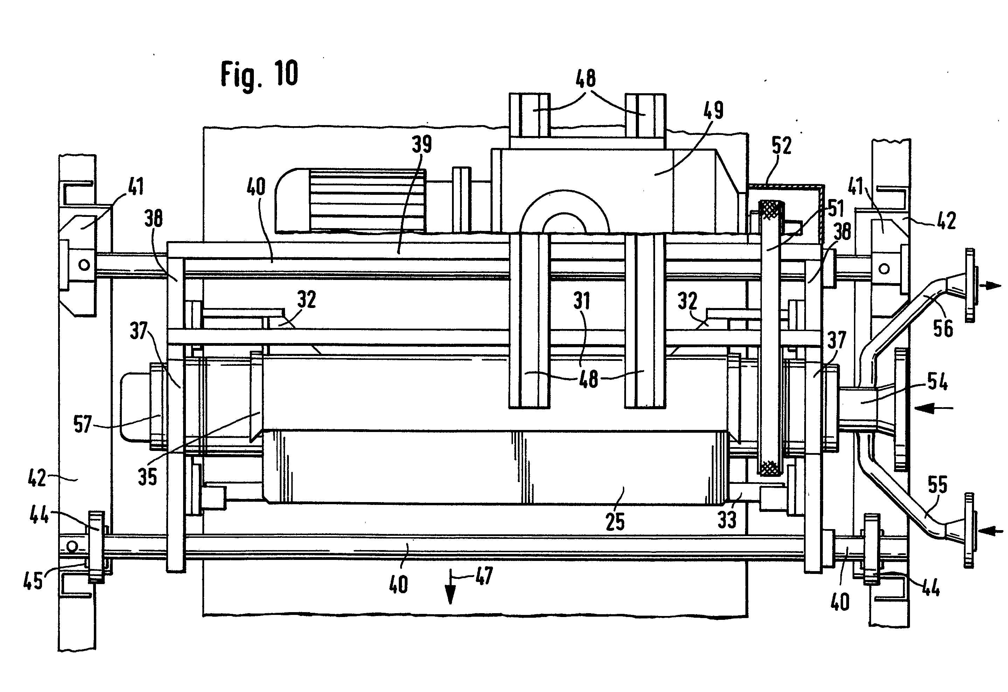

Fig. 1 eine perspektivische und schematische Ansicht einer neuen Vorrichtung zum Auspressen fliessfähiger Massen auf ein Transportband, Fig. 2 den Querschnitt durch die beiden gegeneinander verdrehbaren, zylindrischen Behälter (Trommeln) der Fig. 1, Fig. 3 den Längsschnitt durch die Zylindertrommeln der Fig. 2, Fig. 4 eine perspektivisch und teilweise aufgeschnittene Teilansicht einer anderen Ausführungsform der neuen Auspresseinrichtung, bei der der innere Zylinder doppelwandig ausgebildet ist und von unten betrachtet wird, Fig. 5 eine schematische Darstellung des Abtropfvorganges aus der neuen Vorrichtung, Fig. 6 einen schematischen Schnitt durch eine Auspressvorrichtung mit ineinandergelagerten Trommeln, die oberhalb eines Transportbandes angeordnet sind und zwischen sich einen exzentrischen Spalt bilden, Fig. 7 einen Teillängsschnitt durch die beiden Trommeln der Fig. 6, Fig. 8 eine Seitenansicht einer praktischen Ausführungsform der neuen Austropfeinrichtung, Fig. 9 die Stirnansicht der Vorrichtung der Fig. 8 in Richtung des Pfeiles IV und Fig. 10 die Draufsicht auf die Vorrichtung der Fig. 8 und 9.

Funktionell gleichartige Organe werden mit gleichen Bezugszeichen bezeichnet.

In der Fig. 1 ist ein umlaufendes Transportband, beispielsweise ein Stahlband 1 gezeigt, das endlos ausgebildet und über zwei Rollen 2 geführt ist, von denen nur eine Führungsrolle gezeigt ist. Das Stahlband 1 ist mit einem nicht gezeigten Antrieb versehen, der ihm eine Bewegungsgeschwindigkeit $v_1$ erteilt. Darüber hinaus können noch Kühleinrichtungen vorgesehen sein, die beispielsweise in der Form von unterhalb des Bandes vorgesehenen Sprühdüsen ausgebildet sein können, welche von unten her Kühlflüssigkeit gegen die Bandfläche sprühen und so eine Kontaktkühlung bewirken können. Oberhalb des Stahlbandes 1 ist eine Vorrichtung angeordnet, die aus zwei drehbar ineinander gelagerten zylindrischen Behältern (Trommeln) 3 und 4 besteht, von denen die innere Zylindertrommel 3 über die Stützen 5 ortsfest gelagert ist und sich die äussere Trommel 4 im Sinne des Pfeils 6 auf der ortsfest gelagerten Trommel 3 dreht. Zu diesem Zweck ist die Trommel 4 mit einem Zahnkranz 7 versehen, in den ein Ritzel 8 eines ebenfalls ortsfest gelagerten Antriebsmotors 9 eingreift. Es ist natürlich auch möglich, den Zahnkranz 7 unmittelbar über ein Zahnrad anzutreiben, das mit dem Antrieb für das Stahlband 1 in Verbindung steht.

Die Trommeln 3 und 4 sind gegeneinander abgedichtet, und es sind in der Stirnwand 10 der feststehenden Trommel 3 Zuführrohre 11 und 12 für die Zufuhr des zu verarbeitenden Materials vorgesehen. Ausserdem führen in das Innere der feststehenden Trommel 3 zwei Heizrohre 13 und 14 herein, die in noch näher zu erläuternder Weise entweder mit Elektroheizstäben bestückt sein können oder miteinander verbunden, als Durchflussheizung für das im Inneren der Trommel 3 befindliche und unter Druck stehende Material dienen können.

Wie aus den Fig. 2 und 3 hervorgeht, durchläuft das Zentrum der inneren Trommel 3 auch noch ein Spannbolzen 15, der bei dieser Ausführungsform die beiden Stirnwände 10 der Einrichtung fest und dicht gegeneinander und gegen die Stirnkanten der inneren Trommel zieht.

Aus den Fig. 2 und 3 geht ausserdem hervor, dass die innere feststehende Trommel 3 auf ihrer dem darunterliegenden Stahlband 1 zugewandten Seite mit einer Reihe von Auspressöffnungen 16 versehen ist, die auf einer Mantellinie (Erzeugenden) der zylindrischen Trommel 3 angeordnet sind. Die äussere, drehbare Trommel 4 ist über ihren gesamten Umfang mit mehreren Reihen von Durchtrittsöffnungen 17 versehen, die auch in Fig. 1 zu sehen sind. Diese Öffnungen 17 liegen ebenfalls jeweils auf Erzeugenden der äusseren Trommel 4, und sie sind jeweils in Reihen angeordnet, die gleichmässig auf dem Umfang der Trommel 4 verteilt sind.

Die in das Innere der feststehenden Trommel 3 hereinragenden Zuführrohre 11 und 12 sind, wie anhand des Rohres 12 in Fig. 3 ersichtlich ist, mit Austrittsöffnungen 18 versehen, durch die das unter Druck zugeführte und zu verarbeitende Material in den Innenraum der Trommel 3 eintreten kann. Das Zuführrohr 12 oder das Heizrohr 13 können dabei, so wie in Fig. 3 gezeigt, über die gesamte Länge der Trommel 3 durchgehen, oder auch nur einen Teil dieser Länge einnehmen. Es ist auch möglich, ein Zuführrohr über die gesamte Länge und das andere nur über die halbe Länge auszubilden.

Die beiden Heizrohre 13 und 14 können auch als ein U-Bogen ausgebildet sein und beispielsweise von Heizöl durchflossen werden. Im Ausführungsbeispiel sind die Heizrohre jeweils mit einem Elektroheizstab 190 versehen, der in die Rohre 13 bzw. 14 eingeschoben ist.

Diese neue Einrichtung erlaubt es, durch die Rohre 12 und 11 zugeführte fliessfähige und beispielsweise vorgeheizte viskose Masse unter Druck aus den Öffnungen 16 und von dort aus durch die fluchtend dazu ausgerichteten Öffnungen 17 herauszupressen, von wo sie auf das darunter geführte Stahlband 1 fallen können. Dabei ist es möglich, auf eine Drehung der äusseren Trommel 4 zu verzichten, so dass das zu verarbeitende Material in der Form von Streifen auf das Band abgegeben wird. Es ist aber auch möglich, die äussere Trommel mit einer bestimmten Umfangsgeschwindigkeit gegenüber der feststehenden Trommel 3 zu drehen, so dass jeweils nacheinander verschiedene Reihen mit den Öffnungen 17 zur Deckung mit der Reihe der Öffnungen 16 kommen und in der Zwischenzeit ein Abschliessen der Öffnungen 16 erfolgt. Durch diese Ausgestaltung wird es daher möglich, das zu verarbeitende Material in Tropfenform auf das Band 1 herabfallen zu lassen und beispielsweise zu granulieren. Die auf dem Band 1 befindlichen Tropfen können dann in bekannter Weise gekühlt werden, so dass sie zu festen Teilchen erstarren.

Wie Fig. 5 entnommen werden kann, eröffnet dabei die neue Ausführungsform den Vorteil, dass die Umfangsgeschwindigkeit $v_2$ so auf die Bandgeschwindigkeit $v_1$ abgestimmt werden kann, dass sie grösser oder gleich der Bandgeschwindigkeit ist. Wird zudem der Drehsinn der Trommel 4 so gewählt, dass die Umfangsgeschwindigkeitskomponente in der gleichen Richtung liegt wie die Geschwindigkeitskomponente des Bandes 1, so ergibt sich der Vorteil, dass die aus den Öffnungen 17 herunterfallenden Tropfen 19 bzw. deren noch an den Rändern der Öffnungen 17 anhaftenden Enden 20 nicht wie bei bekannten Einrichtungen wegen des darunter durchlaufenden Bandes 1 nach hinten umfallen und zu unerwünschter Fadenbildung auf dem Band führen, sondern durch die sich mitdrehende Trommel 4 in der Bewegungsrichtung des Bandes mitgeführt werden, so dass sie dann, wenn sie endgültig vom Rand der Öffnungen 17 abreissen, in die Mitte der jeweils auf dem Band befindlichen Tropfen 19 fallen und mit dem dort befindlichen Material wegen der diesem Tropfen noch innewohnenden Wärme zu einem einheitlichen Tropfen verschmelzen. Je nach Wahl des Durchmessers der Trommel wird es auf diese Weise daher möglich, die Produktionsgeschwindigkeit von Tropfenformern wesentlich zu erhöhen, weil bekannte Bauarten hinsichtlich der zu wählenden Bandgeschwindigkeit stets auf die Geschwindigkeit der Tropfenbildung Rücksicht nehmen muss. Das bedeutet, dass bisher die Bandgeschwindigkeit nur so hoch gewählt werden konnte, dass die sich fadenförmig ausbildenden und nachträglich herunterfallenden Enden von viskosen Massen noch mit in die auf dem Band befindliche Tropfenmasse hereinfallen.

In der Fig. 4 ist eine weitere Ausführungsform einer neuen Tropfenformeinrichtung gezeigt, bei der auf die Anordnung von besonderen Heizrohren 13 oder 14 verzichtet wird. Bei der Ausführungsform der Fig. 4 wird zu diesem Zweck die innere feststehende Trommel 3 doppelwandig aus zwei konzentrisch ineinanderliegenden Zylindern 21 und 22 aufgebaut, die jeweils aus zylindrisch gebogenen Blechen bestehen, die längs von Zylindermantelflächen mit ihren Kanten an eine Leiste 23 angeschweisst werden, deren Stärke dem Abstand der beiden Zylinderwandungen 22 und 21 entspricht und die mit den längs einer Mantellinie verlaufenden Öffnungen 16 versehen ist. Die Leiste 23 ist aussen mit einer Zylinderfläche versehen, deren Durchmesser dem der äusseren Wandung 22 entspricht. In den zwischen den beiden Zylinderwandungen 22 und 21 gebildeten Hohlraum kann Heizöl, Dampf oder heisses Wasser geführt werden, so dass auf diese Weise eine Beheizung des im Inneren der Trommel 3 befindlichen und zu verarbeitenden Materials möglich ist. Die übrige Ausgestaltung entspricht jener der Fig. 1 bis 3. Die äussere Trommel 4 ist drehbar gegenüber der inneren Trommel 3 gelagert.

Zur Entfernung des am Umfang der äusseren Trommel 4 haften bleibenden Materials kann, wie in Fig. 2 angedeutet, ein Schaber 24 vorgesehen sein, der in bekannter Weise mit der Schneide gegen die Bewegungsrichtung der Trommel 4 gerichtet ist und das evtl. noch am Umfang der Trommel 4 anhaftende Material abschabt und über seine Oberfläche beispielsweise für eine Wiederaufbereitung zugängig macht. Bei der Ausführungsform der Fig. 4 ist dagegen ein Spachtel 25 vorgesehen, dessen Ende in der Bewegungsrichtung 6 an dem Umfang der Trommel 4 anliegt. Durch diese Ausgestaltung kann am Umfang der Trommel 4 noch anhaftendes Material bei entsprechender Andrückkraft des Spachtels 25 in die Öffnungen 17 der Trommel 4 zurückgedrückt werden, so dass eine gesonderte Wiederaufbereitung nicht notwendig ist. Um diesen Vorgang zu erleichtern, sind etwa spiralförmig verlaufende Nuten 26 zwischen Öffnungen 17 vorgesehen, die jeweils verschiedenen Lochreihen zugeordnet sind. In diese Nuten 26 wird überschüssiges Material vom Spachtel 25 hereingedrückt und kann von hier aus in einfacher Weise auch in die Öffnungen 17 zurückgedrückt werden. Erreicht die entsprechende Lochreihe dann die zugeordnete Öffnungsreihe 16 der inneren Trommel 3, so kann das zurückgedrückte Restmaterial mit dem neuen Tropf auf das Band 1 herausgedrückt werden.

In den Fig. 6 und 7 ist ein Stahlband 1 gezeigt, das als Kühlband od. dgl. ausgebildet sein kann. Auf dieses Stahlband fallen Tropfen 19 eines in die innere feststehende Trommel 3 stirnseitig eingeführten fliessfähigen Materials, die dann auf dem Band erstarren und ein Granulat bilden. Die Tropfen 19 werden dabei dadurch gebildet, dass die äussere Trommel 4 um die innere Trommel 3 rotiert, wobei dann die dem Transportband 1 zugewandte schlitzförmige Öffnung 16 der inneren Trommel 3 mit den über den Umfang der äusseren Trommel 4 gleichmässig verteilten Öffnungen 17 zur Deckung kommt, so dass die im Inneren der Trommel 3 unter Überdruck stehende fliessfähige Masse nach unten austropfen kann.

Um zu verhindern, dass die nichtabgetropfte, in den Löchern 17 noch verbleibende Masse vom Umfang der äusseren Trommel 4 abgeschabt werden muss und dann einer Wiederaufbereitung zugeführt werden muss, ist, wie bei der Ausführung der Fig. 4, eine spachtelförmige Eindrückvorrichtung 25 vorgesehen, mit der das über den Umfang der äusseren Trommel 4 vorstehende Material bei der Rotation der äusseren Trommel 4 in der Drehrichtung 6 in die Öffnungen 17 zurückgedrückt wird. Um diese Zurückdrängwirkung noch wesentlich zu verbessern, ist die innere feststehende Trommel 3 in dem Bereich der in der Fig. 6 gezeigten Schnittebene mit einem Aussendurchmesser d versehen, der kleiner ist als der Innendurchmesser D der äusseren rotierenden Trommel 4. Dieser Durchmesser d der inneren Trommel wird dabei durch eine Ausdrehung am Umfang der Trommel 3 erreicht, die so gelegt ist, dass ihr Mittelpunkt um den Betrag e exzentrisch zu dem Durchmesser D an der Innenseite der äusseren Trommel 4 liegt. Auf diese Weise wird zwischen den beiden Trommeln 3 und 4 der Exzenterspalt 30 gebildet. Seitlich an Tragplatten 38 (nicht abgebildet in Fig. 6) ist sowohl die Abdeckung 31 über Befestigungswinkel 32 als auch der Eindrückspachtel 25 mit Hilfe einer Befestigungsstange 33 angebracht.

Wie aus Fig. 7 hervorgeht, ist ausserhalb des Bereiches des Exzenterspaltes 30 der Aussendurchmesser der inneren Trommel 3 dem Innendurchmesser der äusseren Trommel 4 angepasst, und beide Trommeln sind durch Gleitlager 34 aufeinandergelagert. An beiden Stirnseiten der Abdeckung 31 sind ausserdem dem Aussenumfang der Trommel 4 angepasste, bogenförmig verlaufende Einweisstege 35 vorgesehen, die an ihrem, in Drehrichtung 6 vorderen Ende mit schräg zur Mitte der Trommeln 3 und 4 hin verlaufenden Flächen 36 (nicht abgebildet in Fig. 7) versehen sind, die dafür sorgen, dass Material, das an der Aussenfläche der Trommel 4 anhaftet, in den Bereich unterhalb der Eindrückvorrichtung 25 gelangt und von dort aus in die Öffnungen 17 zurückgedrückt werden kann.

Durch die Anordnung des Exzenterspaltes 30 entsteht bei der Verdrehung der Trommeln 3 und 4 gegeneinander innerhalb des Spaltes 30 ein gewisser Unterdruck, der das Zurückziehen des Materials in die Öffnungen 17 begünstigt. In dem Bereich, der in Drehrichtung 6 hinter der Abdeckung 31 liegt, ist daher der Umfang der äusseren Trommel 4 sauber und für den erneuten Abtropfvorgang beim Erreichen des Schlitzes 16 vorbereitet. Ein Schaber im Bereich hinter der Abdeckung 31 (in Drehrichtung), wie er bei der Ausführung der Fig. 2 mit 24 bezeichnet ist, wird überflüssig.

Aus den Fig. 8 bis 10 geht hervor, dass die beiden ineinandergelagerten Trommeln 3 und 4, von denen nur die äussere Trommel 4 zu sehen ist, oberhalb des als Stahlband 1 ausgebildeten Transport- oder Kühlbandes angeordnet sind. Das geschieht dadurch, dass der äusseren Trommel 4 an den beiden Stirnseiten Aufnahmelager 37 zugeordnet sind, die ihrerseits in stirnseitigen Tragplatten 38 gehalten sind. Die Tragplatten 38 sind untereinander durch Querprofile 39 verbunden und werden jeweils auf zwei Tragstangen 40 gehalten, die quer über das Band 1 verlaufen. Diese Tragstangen 40 sind mit ihren Stirnenden in Lagern 41 auf seitlich U-förmigen Tragprofilen 42 gehalten. Dabei sind die Lager 41 so ausgebildet, dass die Tragstangen 40 zwar in der Bandlaufrichtung festgehalten sind, über Verstellspindeln 43 aber höhenverstellbar angeordnet sind, damit der Abstand des Umfanges der äusseren Trommel 4 von der Oberkante des Stahlbandes 1 einstellbar wird. Die zweite der querverlaufenden Tragstangen 40 ist nicht in höhenverstellbaren Lagern 41 angeordnet, die mit Spindeln 43 versehen sind, sondern ist an ihren Enden jeweils mit Exzentern 44 versehen, die auf entsprechenden Tragflächen 45 aufliegen. Die Tragstangen 40, die mit den Exzentern 44 versehen sind, sind schwenkbar in den Tragplatten 38 angeordnet und lassen sich mit Hilfe eines Handhebels 46 verschwenken, so dass ebenfalls eine Höhenanpassung möglich wird, mit der der Abstand der Trommel 4 zum Band 1 einregelbar ist.

Auf den die seitlichen Tragplatten 38 untereinander verbindenden Querprofilen 39 sind in Bandlaufrichtung 47 verlaufende Tragprofile 48 angeordnet, auf denen ein Getriebe 49 sitzt, das von einem Motor 50 angetrieben wird. Das Getriebe 49 steht über einem Riemen 51, der unter einer Abdeckung 52 liegt, mit einem Antriebsrad 53 in Verbindung, das fest mit der äusseren Trommel 4 verbunden ist. Über den Motor 50 kann daher die äussere Trommel 4 in Rotation versetzt werden.

Dem Innenraum der inneren, nicht sichtbaren, feststehenden Trommel 3 wird das zu granulierende Produkt über die Zuleitung 54 stirnseitig zugeführt, wobei das Produkt in der Regel so weit aufgeheizt ist, dass es fliess- und tropffähig ist. Zu diesem Zweck sind, wie bei den Ausführungsbeispielen der Fig. 1 bis 5, der inneren, feststehenden Trommel 3 Beheizungseinrichtungen zugeordnet, wobei das Heizmedium über die Zuführleitung 55 in das Innere der Trommel 3 und über die Abflussleitung 56 von dort wieder entnommen wird. Die Heizung kann dabei durch innerhalb der Trommel 3 verlaufende Rohre (Fig. 1 bis 3) oder auch dadurch gebildet sein, dass die innere Trommel 3 doppelwandig (Fig. 4) ausgeführt ist und in diesem doppelwandigen Bereich mit dem Heizmittel beaufschlagt ist. Die innere Trommel 3 wird fest mit einer der Stirnwände, beispielsweise der Tragplatte 38, verbunden. Die Trommel lässt sich nach Lösen einer verschraubten Stirnplatte 57 zur Demontage stirnseitig aus der äusseren Trommel 4 herausziehen.

**Patentansprüche**

1. Vorrichtung zum Auspressen von fliessfähigen Massen aus einem zylindrischen, drehbaren Behälter (4), der mit auf seinem Umfang verteilt angeordneten Durchtrittsöffnungen (17) für die dem Behälter (4) axial zugeführten Massen versehen und oberhalb eines Transport- oder Kühlbandes (1) angeordnet ist, auf welches die austretenden Massen fallen und anschliessend erstarren oder gelieren, wobei das Auspressen durch eine Relativdrehung eines weiteren zylindrischen Körpers (3) gegenüber dem Behälter (4) bewirkt wird, dadurch gekennzeichnet, dass der weitere zylindrische Körper (3) ebenfalls als ein zylindrischer Behälter (3) ausgebildet ist, dessen Wandung an der Innenwandung des ersten Behälters (4) relativ drehbar geführt ist und der mit dem Transportband (1) zugewandten Öffnungen (16) versehen ist, die bei der Relativdrehung der beiden Behälter (3, 4) zyklisch mit den Öffnungen (17) des ersten zylindrischen Behälters (4) zur Deckung kommen.

2. Vorrichtung nach Anspruch 1, dadurch gekennzeichnet, dass die beiden Behälter jeweils als zylindrische Trommeln (3, 4) ausgebildet sind und die Öffnungen (16, 17) jeweils in Reihen angeordnet sind, die parallel zu der gemeinsamen Zylinderachse verlaufen.

3. Vorrichtung nach den Ansprüchen 1 und 2, dadurch gekennzeichnet, dass die Zylinderachse (15) senkrecht zur Bewegungsrichtung des Transportbandes (1) angeordnet ist.

4. Vorrichtung nach den Ansprüchen 1 bis 3, dadurch gekennzeichnet, dass die innere Trommel (3) ortsfest angeordnet ist.

5. Vorrichtung nach Anspruch 4, dadurch gekennzeichnet, dass die äussere Trommel (4) mehrere Reihen von Öffnungen (17) aufweist, die jeweils mit einer Öffnung (16) in der inneren Trommel in einer senkrecht zu der Zylinderachse stehenden Ebene liegen.

6. Vorrichtung nach einem der vorhergehenden Ansprüche, dadurch gekennzeichnet, dass die Umfangsgeschwindigkeit ($v_2$) und die Drehrichtung (6) der äusseren Trommel (4) so gewählt sind, dass die dem Band (1) zugewandte Umfangsgeschwindigkeitskomponente in Richtung des Bandlaufes liegt und grösser oder gleich der Bewegungsgeschwindigkeit ($v_1$) des darunterliegenden Transportbandes (1) ist.

7. Vorrichtung nach einem der vorhergehenden Ansprüche, dadurch gekennzeichnet, dass ein Schaber (24) zur Entfernung von überflüssigem, nicht abgetropftem Material vom Umfang der äusseren Trommel (4) vorgesehen ist.

8. Vorrichtung nach Anspruch 7, dadurch gekennzeichnet, dass der Schaber (24) als Spachtel (25) ausgebildet ist und mit seiner Vorderkante in der Drehrichtung (6) der äusseren Trommel (4) an deren Umfang anliegt.

9. Vorrichtung nach Anspruch 8, dadurch gekennzeichnet, dass Nuten (26) zwischen mindestens zwei der auf dem Umfang der äusseren Trommel (4) versetzt angeordneten Öffnungen (17) vorgesehen sind.

10. Vorrichtung nach den Ansprüchen 8 und 9, dadurch gekennzeichnet, dass die Nuten (26) schraubenlinienförmig zwischen Öffnungen (17), welche in verschiedenen, zueinander parallelen und senkrecht zu der Zylinderachse (15) stehenden Ebenen und auf verschiedenen Erzeugenden der äusseren Trommel (4) liegen, verlegt sind.

11. Vorrichtung nach den Ansprüchen 1 bis 3, dadurch gekennzeichnet, dass die innere Trommel (3) mit einer Beheizung (13, 14) versehen ist.

12. Vorrichtung nach Anspruch 11, dadurch gekennzeichnet, dass die Beheizung als in den Innenraum der Trommel (3) eingeführte Heizrohre (13, 14) ausgeführt ist.

13. Vorrichtung nach Anspruch 11, dadurch gekennzeichnet, dass die innere Trommel (3) doppelwandig ausgebildet ist und der zwischen den Wandungen (21, 22) gebildete Raum als ein vom Heizmittel durchströmter Raum ausgebildet ist.

14. Vorrichtung nach Anspruch 13, dadurch gekennzeichnet, dass die beiden Wandungen (21, 22) der inneren Trommel (3) durch zylindrisch gebogene Blechplatten gebildet sind, die mit ihren Kanten jeweils an zwei Mantellinien mit einer Leiste (23) verbunden sind, welche die Öffnungen (16) zum Auspressen der fliessfähigen Masse aufweist.

15. Vorrichtung zum tropfenförmigen Auspressen von fliessfähigen Massen aus einem druckbeaufschlagten zylindrischen Behälter (3), der oberhalb eines Transport- oder Kühlbandes (1) angeordnet und mit diesem zugewandten Öffnungen (16) versehen ist, aus denen die Tropfen (19) fallen und anschliessend erstarren oder gelieren, wobei die Öffnungen (16) jeweils durch Wandteile eines zweiten, relativ zum ersten Behälter (3) drehbaren und diesen ummantelnden zylindrischen Behälters (4) verschliessbar sind, der mit auf dem Umfang verteilt angeordneten Öffnungen (17) versehen ist, die bei der gegenseitigen Verdrehung der Behälter (3, 4) zyklisch mit den Öffnungen (16) des ersten Behälters (3) zur Deckung kommen, dadurch gekennzeichnet, dass in dem vom Transport- oder Kühlband (1) abgewandten Bereich zwischen beiden zylindrischen Behältern (3, 4) ein exzentrischer Spalt (30) vorgesehen ist.

16. Vorrichtung nach Anspruch 15, dadurch gekennzeichnet, dass der exzentrische Spalt (30) durch eine am Umfang des innen liegenden zylindrischen Behälters (3) vorgesehene, exzentrisch angeordnete Ausdrehung gebildet ist, deren Durchmesser (d) kleiner ist als der Innendurchmesser (D) des äusseren zylindrischen Behälters (4).

17. Vorrichtung nach den Ansprüchen 15 und 16 mit einer spachtelförmigen Eindrückvorrichtung (25) am Umfang des Aussenbehälters, mit der das in den Öffnungen (17) hängende Material nach innen zurückgedrückt werden soll, dadurch gekennzeichnet, dass die Eindrückvorrichtung (25) in dem Bereich des Exzenterspaltes (30) angeordnet ist.

18. Vorrichtung nach Anspruch 17, dadurch gekennzeichnet, dass fluchtend zu dem am Umfang des äusseren zylindrischen Behälters (4) anliegenden Eindrückspachtel (25) eine am Umfang anliegende Abdeckung (31) vorgesehen ist, die etwa den Abschnitt überspannt, in dem die beiden Behälter (3, 4) zwischen sich den Exzenterspalt (30) bilden.

19. Vorrichtung nach den Ansprüchen 15 bis 18, dadurch gekennzeichnet, dass die Abdeckung (31) seitlich durch der Wölbung des äusseren Behälters (4) angepasste bogenförmige Einweisstege (35) begrenzt ist.

20. Vorrichtung nach Anspruch 19, dadurch gekennzeichnet, dass die Einweisstege (35) an ihrem in Drehrichtung des äusseren Behälters (4) vorne liegenden Enden mit Schrägflächen (36) versehen sind, die in den Bereich der Eindrückvorrichtung (25) einlaufen.

**Claims**

1. Apparatus for the extrusion of flowable masses from a cylindrical rotatable container (4), around the circumference of which are distributed passage openings for the material axially supplied to the container (4) and which is arranged above a transport of cooling band (1) onto which emerging masses fall and subsequently solidify or gel, in which the extrusion is caused by relative rotation of a further cylindrical body (3) with respect to the container (4) characterised in that the further cylindrical body (3) is likewise formed as a cylindrical container (3), the wall of which is relatively rotatably arranged on the inner wall of the container (4) and is provided with openings (16) facing the transport band (1) which during relative rotation of the two containers (3, 4) cyclically cover the openings (17) in the first container (4).

2. Apparatus according to claim 1, characterised in that the two containers are in each case formed as cylindrical drums and the openings (16, 17) are in each case arranged in rows, which extend parallel to the common axis of the cylinders.

3. Apparatus according to claim 1 and 2, characterised in that the cylinder axis (15) is arranged perpendicular to the direction of motion of the transport band (1).

4. Apparatus according to claims 1 to 3, characterised in that the inner drum (3) is fixed.

5. Apparatus according to claim 4, characterised in that the outer drum (4) has several rows of openings (17) which in each case, together with an opening (16) in the inner drum, lie in a plane which is perpendicular to the cylinder axis.

6. Apparatus according to any one of the preceding claims, characterised in that the circumferential velocity $(V_2)$ and direction of rotation (6) of the outer drum (4) are so selected that the component of circumferential velocity facing the band lies in the direction of movement of the band, and is greater than or equal to the velocity of movement $(V_1)$ of the transport band lying under it.

7. Apparatus according to any of the preceding claims, characterised in that a scraper (24) is provided for the removal of excess material which has not dripped off the circumference of the outer drum (4).

8. Apparatus according to claim 7, characterised in that the scraper (24) is formed as a spatula (25) and butts against the outer drum (4) with its front edge in the direction of rotation thereof.

9. Apparatus according to claim 8, characterised in that grooves (26) are provided between at least two of the staggered openings (17) on the circumference of the outer drum (4).

10. Apparatus according to claims 8 and 9, characterised in that the grooves (26) extend in spiral form between openings (17) which lie in various planes which are parallel to one another and perpendicular to the cylinder axis (15) and lie on various generators of the outer drum (4).

11. Apparatus according to claims 1 to 3 characterised in that the inner drum is provided with heating means (13, 14).

12. Apparatus according to claim 11, characterised in that the heating means is provided as heating tubes (13, 14) passing into the interior of the drum (3).

13. Apparatus according to claim 11, characterised in that the inner drum (3) is double walled and the space between the walls (21, 22) is formed as a space through which a heating medium can flow.

14. Apparatus according to claim 13, characterised in that the two walls (21, 22) are formed of cylindrically curved metal plates, which with their edges in each case are connected to two convex lines with a strip (23) which has the openings (16) for extrusion of the flowable mass.

15. Apparatus for the dropwise extrusion of flowable masses from a pressurised cylindrical container (3) which is arrangend above a transport or cooling band (1) and is provided with openings (16) facing this band, out of which the drops (19) fall and then solidify or gel, in which the openings (16) are in each case lockable by means of wall portions of a second container (4) which is rotatable relative to the first (3) and encases it, and which is provided with openings (17) distributed on its circumference, which by relative rotation of the container (3, 4) cyclically cover the openings (16) of the first container (3) characterised in that an eccentric slot (30) is provided in the region of the two cylindrical containers (30) which is turned away from the transport or cooling band (1).

16. Apparatus according to claim 15, characterised in that the eccentric slot (30) is formed by an eccentrically arranged outward turning provided on the circumference of the inside cylindrical container, the diameter of which is smaller than the inside diameter (D) of the outer cylindrical container (4).

17. Apparatus according to claims 14 and 16, having pressing-in means (25) in the form of a spatula on the circumference of the outer container, with which material adhering in the openings (17) is to be pressed back, characterised in that the pressing-in means (25) is arranged in the region of the eccentric slot (30).

18. Apparatus according to claim 17, characterised in that a cover (31) is provided overlying the circumference (31) which is aligned with the pressing-in spatula (25) on the circumference of the outer cylindrical container (4) which substantially spans the section where the two containers (3, 4) form between them the eccentric slot.

19. Apparatus according to claims 15 to 18, characterised in that the cover (31) is bounded at the side by curved guide flanges (35) adapted to the curvature of the outer container (4).

20. Apparatus according to claim 19, characterised in that the guide flanges (35) are provided with inclined surfaces (36) on their ends which are at the front in the direction of rotation of the outer container, which slope inwards in the region of the pressing-in means.

**Revendications**

1. Appareil à éjecter des matières fluides d'un récipient cylindrique tournant (4) qui est muni d'ouvertures de passage (17) disposées de façon répartie sur sa circonférence, destinées aux matières amenées axialement au récipient (4) et qui est disposé au-dessus d'une courroie transporteuse ou de refroidissement (1) sur laquelle les matières sortantes tombent et ensuite se solidifient ou se gélifient, l'éjection étant assurée par une rotation relative d'un autre corps cylindrique (3) par rapport au récipient (4), ledit appareil étant caractérisé en ce que l'autre corps cylindrique (3) est également conçu sous la forme d'un récipient cylindrique (3) dont la paroi est guidée de manière à pouvoir tourner relativement sur la paroi interne du premier récipient (4) et qui est muni d'ouvertures (16) tournées vers la courroie transporteuse (1) et qui, lors de la rotation relative des deux récipients (3, 4), viennent coïncider cycliquement avec les ouvertures (17) du premier récipient cylindrique (4).

2. Appareil selon la revendication 1, caractérisé en ce que les deux récipients sont conçus chacun sous forme de tambours cylindriques (3, 4) et en ce que les ouvertures (16, 17) sont chaque fois disposées en rangées dirigées parallèlement à l'axe commun des cylindres.

3. Appareil selon les revendications 1 et 2, caractérisé en ce que l'axe (15) des cylindres est perpendiculaire à la direction de mouvement de la courroie transporteuse (1).

4. Appareil selon les revendications 1 à 3, caractérisé en ce que le tambour interne (3) est fixé.

5. Appareil selon la revendication 4, caractérisé en ce que le tambour externe (4) présente plusieurs rangées d'ouvertures (17) dont chacune est située, avec une ouverture (16), du tambour interne, dans un plan perpendiculaire à l'axe des cylindres.

6. Appareil selon l'une des revendications précédentes, caractérisé en ce que la vitesse circonférentielle ($v_2$) et le sens de rotation (6) du tambour externe sont choisis de telle sorte que la composante de vitesse circonférentielle tournée vers la courroie (1) est située dans le sens de la marche de la courroie et est supérieure ou égale à la vitesse de mouvement ($v_1$) de la courroie transporteuse (1) située en dessous.

7. Appareil selon l'une des revendications précédentes, caractérisé en ce qu'une racle (24) est prévue pour enlever de la circonférence du tambour externe (4) la matière en excès qui ne s'est pas écoulée.

8. Appareil selon la revendication 7, caractérisé en ce que la racle (24) est conçue sous forme d'une spatule (25) et en ce que par son bord antérieur, dans le sens de rotation (6) du tambour externe (4), elle s'applique contre la circonférence de celui-ci.

9. Appareil selon la revendication 8, caractérisé en ce que des rainures (26) sont prévues entre au moins deux des ouvertures (17) disposées avec décalage sur la circonférence du tambour externe (4).

10. Appareil selon les revendications 8 et 9, caractérisé en ce que les rainures (26) sont disposées hélicoïdalement entre des ouvertures (17) qui sont situées dans des plans différents parallèles entre eux et perpendiculaires à l'axe (15) des cylindres et sur des génératrices différentes du tambour externe (4).

11. Appareil selon les revendications 1 à 3, caractérisé en ce que le tambour interne (3) est muni d'un chauffage (13, 14).

12. Appareil selon la revendication 11, caractérisé en ce que le chauffage est exécuté sous la forme de tubes chauffants (13, 14) introduits dans la cavité interne du tambour (3).

13. Appareil selon la revendication 11, caractérisé en ce que le tambour interne (3) est à double paroi et que l'espacement formé entre les parois (21, 22) est conçu sous la forme d'un espacement parcouru par l'agent de chauffage.

14. Appareil selon la revendication 13, caractérisé en ce que les deux parois (21, 22) du tambour interne (3) sont formées par des plaques de tôle cintrées cylindriquement qui, à leurs bords, sont reliées, chacune le long de deux génératrices, par une baguette (23) qui présente les ouvertures (16) pour l'éjection de la matière fluide.

15. Appareil à éjecter par gouttes des matières fluides d'un récipient cylindrique (3) soumis à une pression qui est disposé au-dessus d'une courroie transporteuse ou de refroidissement (1) et muni d'ouvertures (16) tournées vers celle-ci et desquelles les gouttes (19) tombent et ensuite se solidifient ou se gélifient, les ouvertures (16) pouvant être fermées chacune par des parties de paroi d'un deuxième récipient cylindrique (4) pouvant tourner relativement au premier récipient et enveloppant celui-ci et qui est muni d'ouvertures (17) disposées de façon distribuée à la circonférence et qui, lors de la rotation relative des récipients (3, 4), viennent coïncider cycliquement avec les ouvertures (16) du premier récipient, ledit appareil étant caractérisé en ce que dans la zone opposée à la courroie transporteuse ou de refroidissement (1) est prévu, entre les deux récipients cylindriques (3, 4) un interstice excentrique (30).

16. Appareil selon la revendication 15, caractérisé en ce que l'interstice excentrique (30) est formé par un évidement creusé autour, disposé excentriquement, prévu à la circonférence du récipient cylindrique (3) placé à l'intérieur et dont le diamètre (d) est plus petit que le diamètre interne (D) du récipient cylindrique externe (4).

17. Appareil selon les revendications 15 et 16, comportant à la circonférence du récipient externe un dispositif d'enfoncement en forme de spatule (25) qui a pour rôle de repousser vers l'intérieur la matière accrochée dans les ouvertures (17), caractérisé en ce que le dispositif d'enfoncement (25) est disposé dans la zone de l'interstice excentrique (30).

18. Appareil selon la revendication 17, caractérisé en ce que dans l'alignement de la spatule d'enfoncement (25) appliquée à la circonférence du récipient cylindrique externe (4) est prévu un recouvrement (31) appliqué à la circonférence et qui franchit à peu près la partie où les deux récipients (3, 4) forment entre eux l'interstice excentrique (30).

19. Appareil selon les revendications 15 à 18, caractérisé en ce que le recouvrement (31), est limité latéralement par des baguettes de guidage cintrées (35) adaptées à la courbure du récipient externe.

20. Appareil selon la revendication 19, caractérisé en ce que les baguettes de guidage (35) sont munies, à leurs extrémités situées en avant dans le sens de rotation du récipient externe (4), de surfaces obliques (36) qui entrent dans la zone du dispositif d'enfoncement (25).

Fig. 1

Fig. 2

# Fig. 3

0 012 192

**Fig. 4**

**Fig. 5**

Fig. 7

Fig. 6

Fig. 8

# Fig. 9

Fig. 10